Europäisches Patentamt

European Patent Office

Office européen des brevets

(19)

(11) Veröffentlichungsnummer: **0 157 933**
**B1**

(12) # EUROPÄISCHE PATENTSCHRIFT

(45) Veröffentlichungstag der Patentschrift:
**11.03.87**

(51) Int. Cl.⁴: **F 24 D  3/00**

(21) Anmeldenummer: **84115310.9**

(22) Anmeldetag: **12.12.84**

(54) **Heizungsanlage.**

(30) Priorität: **14.03.84  DE 3409396**

(43) Veröffentlichungstag der Anmeldung:
**16.10.85 Patentblatt 85/42**

(45) Bekanntmachung des Hinweises auf die Patenterteilung:
**11.03.87 Patentblatt 87/11**

(84) Benannte Vertragsstaaten:
**AT CH DE FR LI**

(56) Entgegenhaltungen:
**DE - A - 3 101 138**
**DE - A - 3 115 697**
**DE - A - 3 126 325**

(73) Patentinhaber: **KKW Kulmbacher Klimageräte-Werk
GmbH, Am Goldenen Feld 18, D-8650 Kulmbach (DE)**

(72) Erfinder: **Mikhail, Noya, Wildenbergerstrasse 1,
D-8641 Weissenbrunn (DE)**

(74) Vertreter: **Mehl, Ernst, Dipl.-Ing. et al, Postfach 22 01 76,
D-8000 München 22 (DE)**

ACTORUM AG

## Beschreibung

Die Erfindung bezieht sich auf eine Heizungsanlage nach dem Oberbegriff des Anspruches 1.

Aus der DE-A-31 01 138 ist um wesentlichen eine Heizungsanlage der im Oberbegriff des Anspruches 1 genannten Art bekannt. Bei koaxialer Anordnung des Mantelrohres, des Mittelrohres und des Innenrohres ist das im Innenrohr strömende Brauchwasser entweder durch die Wärmepumpe von dem zwischen dem Mantelrohr und dem Mittelrohr strömenden Kältemittel oder vom Wärmeträger des Heizungskreislaufes aufheizbar, wenn der Wärmeträger von einer weiteren Heizquelle, beispielsweise einem Heizkessel aufgeheizt wird. Beim Aufheizen des Brauchwassers durch die Wärmepumpe dient der Wärmeträger des Heizungskreislaufes lediglich zur Übertragung der Wärmeenergie des Kältemittels auf das Brauchwasser. Durch die bekannte Anordnung ist es möglich, mit einer Wärmepumpe sowohl zu heizen als auch Brauchwasser zu bereiten. Bislang konnte mit einer Wärmepumpe entweder nur geheizt oder nur Brauchwasser erwärmt werden. Zum Erwärmen von Brauchwasser war es seither erforderlich, in einem Warmwasserspeicher einen Wärmetauscher anzuordnen, um die vom Heizkessel erzeugte Wärme auf das Brauchwasser übertragen zu können. Durch die koaxiale Anordnung des Mantelrohres, des Mittelrohres und des Innenrohres des Kondensators der Wärmepumpe kann in kostengünstiger Weise ein solcher Wärmetauscher in einem zugeordneten Warmwasserspeicher entfallen. Das Aufheizen des Brauchwassers mittels der Wärmepumpe ist jedoch sehr träge und zudem mit Wärmeverlusten behaftet, da während der Übertragung im Wärmeträger des Heizungskreislaufes Wärme verloren geht.

Der Erfindung liegt die Aufgabe zu Grunde, die Heizungsanlage nach dem Gattungsbegriff des Anspruches 1 so auszubilden, dass das Aufheizen des Brauchwassers mittels der Wärmepumpe mit einem besseren Wirkungsgrad und weitgehend trägheitslos erfolgt.

Die gestellte Aufgabe wird erfindungsgemäss durch die im kennzeichnenden Teil des Anspruches 1 angegebene Ausbildung gelöst.

Eine zweckmässige Weiterbildung des Erfindungsgegenstandes ist im Anspruch 2 angegeben.

Ein Ausführungsbeispiel der Erfindung ist in der Zeichnung rein schematisch dargestellt. Es zeigen:

Fig. 1 in perspektivischer Darstellung einen gewendelten Rohrkondensator einer Wärmepumpe,

Fig. 2 ein Einbindungsschema einer Wärmepumpe in einer Heizungsanlage, die neben der Wärmepumpe als weitere Heizquelle einen Heizkessel aufweist.

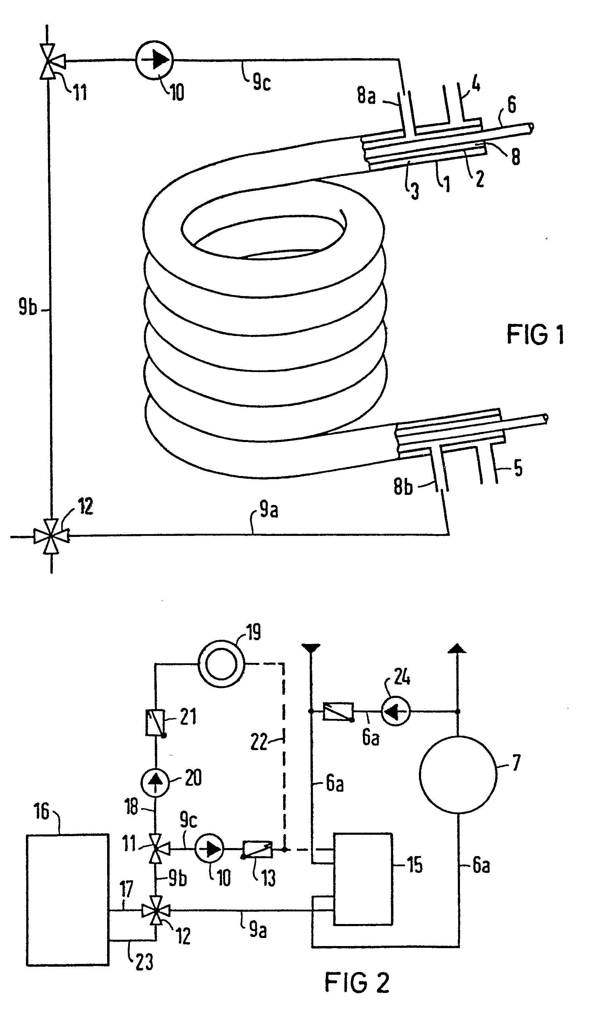

Der in Fig. 1 dargestellte Kondensator einer Wärmepumpe weist ein schraubengangförmig gebogenes Mantelrohr 1 auf.

Im Mantelrohr 1 ist koaxial ein Mittelrohr 2 angeordnet. Die Rohre 1 und 2 begrenzen einen Ringraum 3, der über Anschlüsse 4, 5 im Kältemittelkreislauf der Wärmepumpe liegt.

Zentrisch im Mantelrohr 1 ist ein Innenrohr 6 vorgesehen, das in einem Brauchwasserkreis 6a (Fig. 2) liegt, der einen Warmwasserspeicher 7 (Fig. 2) enthält.

Das Innenrohr 6 und das Mittelrohr 2 begrenzen einen Ringraum 8 für einen Wärmeträger eines in Verbindung mit Fig. 2 näher erläuterten Heizungskreislaufes.

Zwischen einem Eingangsstutzen 8a und einem Ausgangsstutzen 8b des Ringraumes 8 erstreckt sich eine Kurzschlussleitung 9 mit den Teilsträngen 9a, 9b, 9c.

Die Kurzschlussleitung 9 enthält eine Umwälzpumpe 10, ein Dreiwegeventil 11, sowie einen Vierwegemischer 12.

Die Funktion der beschriebenen Anordnung wird an Hand der Fig. 2 beschrieben.

In Fig. 2 ist eine Wärmepume mit 15 bezeichnet, die in nicht gezeichneter Weise den in Fig. 1 gezeigten Kondensator enthält. Die Fig. 2 zeigt die schon in Verbindung mit Fig. 1 beschriebene Kurzschlussleitung 9, ferner die Umwälzpumpe 10, das Dreiwegeventil 11, den Vierwegemischer 12 und eine Rückschlagklappe 13.

Mit 16 ist in Fig. 2 ein Heizkessel bezeichnet, von dem ein Vorlauf 17 ausgeht, der zu einem Anschluss des Vierwegemischers 12 führt.

Vom Vierwegemischer 12 führt der Teilstrang 9b der Kurzschlussleitung 9 zum Dreiwegeventil 11.

Der freie Anschluss des Dreiwegeventils 11 ist Ausgang eines Vorlaufstranges 18 zu einem für Raumheizung ausgebildeten Wärmetauscher 19, beispielsweise einem Radiator oder einem Rohrleitungssystem einer Fussbodenheizung. Im Vorlaufstrang 18 ist eine Umwälzpumpe 20 und eine Rückschlagklappe 21 vorgesehen. Vom Wärmetauscher 19 führt eine Rücklaufleitung 22 zu dem Teilstrang 9c der Kurzschlussleitung, der wie in Fig 1 näher dargestellt, das Dreiwegeventil 11 mit dem Eingangsstuzen 8a des Ringraumes 8 verbindet. Die Rücklaufleitung 22 kann auch in nicht dargestellter Weise direkt am Eingangsstutzen 8a angeschlossen sein. Der Vorlauf 17, der den Vierwegemischer 12 mit dem Dreiwegeventil 11 verbindende Teilstrang 9b der Kurzschlussleitung 9, der Vorlaufstrang 18, die Teile 20, 21, der Wärmetauscher 19 und die Rücklaufleitung 22 sind Teile des bereits in Zusammenhang mit Fig. 1 erwähnten Heizungskreislaufes, der am Ausgangsstutzen 8b den in Fig. 1 gezeigten Kondensator verlässt und über den Teilstrang der Kurzschlussleitung 9a zum Vierwegemischer 12 zurückläuft, dessen freier Anschluss über einen Rücklauf 23 mit dem Heizkessel 16 verbunden ist.

## Wirkungsweise:

Im alleinigen Betrieb des Heizkessels 16 nimmt der im Heizungskreislauf befindliche Wärmeträger, gefördert durch die Umwälzpumpe 20, folgenden Lauf: Heizkessel 16, Vorlauf 17, Vierwegemischer 12, Teilstrang 9b, Dreiwegeventil 11, Vorlaufstrang 18, Wärmetauscher 19, Rücklaufleitung 22, Kondensator der Wärmepumpe 15, Teilstrang 9a, Vierwegemischer 12, Rucklauf 23, Heizkessel 16.

Soll mit dem Heizkessel 16 neben Lieferung von Wärme an den Wärmetauscher 19, zugleich auch Brauchwasser erwärmt werden, wird eine Umwälzpumpe 24 im Brauchwasserkreis 6a eingeschaltet. Das Brauchwasser im Innenrohr 6 wird sodann von dem den Ringraum 8 durchströmenden Wärmeträger des Heizungskreislaufes forlaufend solange aufgeheizt, bis sich Temperaturschichtung eingestellt hat.

Soll dagegen mit dem Heizkessel 16 nur Brauchwasser erwärmt werden, sind der Vierwegemischer 12 und das Dreiwegeventil 11 so zu stellen, dass der vom Heizkessel 16 aufgeheizte Wärmeträger, bei eingeschalteter Umwälzpumpe 24, folgenden Weg nimmt: Vorlauf 17, Vierwegemischer 12, Teilstrang 9b der Kurzschlussleitung 9, Dreiwegeventil 11, Teilstrang 9c der Kurzschlussleitung 9, Ringraum 8 des Kondensators, Teilstrang 9a der Kurzschlussleitung 9, Vierwegemischer 12, Rücklauf 23, Heizkessel 16 und so fort.

Wenn hingegen mit der Wärmepumpe 15 Brauchwasser erwärmt werden soll, werden der Vierwegemischer 12 und das Dreiwegeventil 11 so gestellt, dass die in der Kurzschlussleitung 9 und dem Ringraum 8 befindliche verhältnismässig geringe Teilmenge des Wärmeträgers gegen die im Heizkessel 16, im Vorlauf 17, im Vorlaufstrang 18, im Wärmeträger 19 in der Rücklaufleitung 22 und im Rücklauf 23 befindliche übrige Menge des Wärmeträgers abgesperrt ist. Bei eingeschalteter Wärmepumpe 15 und fördernder Umwälzpumpe 24 ist die in der Kurzschlussleitung 9 und im Ringraum 8 eingeschlossene Teilmenge des Wärmeträgers von dem den Ringraum 3 durchströmenden Kältemittel so schnell aufheizbar, dass schon nach einer vernachlässigbar kurzen Zeit die maximal mögliche Wärmeenergie nahezu trägheitslos vom Kältemittel im Ringraum 3 über den Wärmeträger im Ringraum 8 auf das im Brauchwasserkreis 6a umströmende Brauchwasser übertragbar ist.

## Patentansprüche

1. Heizungsanlage, mit den Merkmalen:

a) es sind zwei Heizquellen vorgesehen, ein Heizkessel (16) und eine Wärmepumpe (15);

b) die Wärmepumpe (15) enthält einen Kondensator, der ein Mantelrohr (1), ein koaxial im Mantelrohr (1) angeordnetes Mittelrohr (2) und ein zentrisch im Mittelrohr (2) angeordnetes Innenrohr (6) aufweist;

c) zwischen dem Mantelrohr (1) und dem Mittelrohr (2) besteht ein erster Ringraum (3), der im Kältemittelkreislauf der Wärmepumpe (15) liegt;

d) zwischen dem Mittelrohr (2) und dem Innenrohr (6) besteht ein zweiter Ringraum (8) für den Durchfluss eines Wärmeträgers eines Heizungskreislaufes, in den der Heizkessel (16) eingebunden ist;

e) das Innenrohr (6) liegt in einem Brauchwasserkreis (6a);

gekennzeichnet durch die Merkmale:

f) eine aus Teilsträngen (9a, 9b, 9c) bestehende Kurzschlussleitung (9) verbindet einen Ausgangsstutzen (8b) des zweiten Ringraumes (8) mit einem Eingangsstutzen (8a) des zweiten Ringraumes (8);

g) der Zufluss von Wärmeträger zum Eingangsstutzen (8a) ist durch ein Dreiwegeventil (11) absperrbar, an das die Teilstränge (9b, 9c) und ein Vorlaufstrang (18) des Heizungskreislaufes angeschlossen sind;

h) der Abfluss des Wärmeträgers vom Ausgangsstutzen (8b) ist bei gesperrtem Zufluss von Wärmeträger zum Eingangsstutzen (8a) durch ein Vierwegeventil (12) absperrbar, an das die Teilstränge (9a, 9b) sowie ein Vorlauf (17) vomund ein Rücklauf (23) zum Heizkessel (16) angeschlossen sind.

2. Heizungsanlage nach Anspruch 1, dadurch gekennzeichnet, dass die Kurzschlussleitung (9) eine eigene Umwälzpumpe (10) enthält.

## Revendications

1. Installation de chauffage ayant les caractéristiques suivantes:

a) il est prévu deux sources de chauffage, une chaudière de chauffage (16) et une pompe à chaleur (15);

b) la pompe à chaleur (15) contient un condenseur, qui comprend un tuyau de protection (1), un tuyau intermédiaire (2) disposé coaxialement au tuyau de protection (1) et un tuyau intérieur (6) disposé au centre du tuyau intermédiaire (2);

c) entre le tuyau de protection (1) et le tuyau intermédiaire (2) est formée une première chambre annulaire (3) qui se trouve dans le circuit du fluide frigorigène de la pompe à chaleur (15);

d) entre le tuyau intermédiaire (2) et le tuyau intérieur (6) est formée une seconde chambre annulaire (8) pour le passage du fluide caloporteur d'un circuit de chauffage, auquel la chaudière de chauffage (16) est reliée;

e) le tuyau intérieur (6) est dans un circuit d'eau sanitaire (6a);

remarquable par les caractéristiques suivantes:

f) un conduit de court-circuit (9), constitué de tronçons partiels (9a, 9b, 9c) met un raccord de sortie (8b) de la seconde chambre annulaire (8) en communication avec un raccord d'entrée (8a) de la seconde chambre annulaire (8);

g) l'arrivée du fluide caloporteur au raccord d'entrée (8a) peut être arrêtée par une vanne à trois voies (11), à laquelle sont raccordés les tronçons partiels (9b, 9c) et un tronçon d'alimentation (18) du circuit de chauffage;

h) la sortie du fluide caloporteur du raccord de sortie (8b) peut être arrêtée, lorsque l'arrivée du fluide caloporteur au raccord d'entrée (8a) est arrêtée, par une vanne à quatre voies (12), à laquelle sont raccordés les tronçons partiels (9a, 9b), ainsi qu'un conduit d'alimentation (17) venant de la chaudière de chauffage (16) et un conduit de retour (23) y ramenant.

2. Installation de chauffage suivant la revendication 1, caractérisée en ce que le conduit de court-circuit (9) comporte sa propre pompe de circulation (10).

## Claims

1. A heating installation having the features:

a) there are provided two heating sources, a heating boiler (16) and a heat pump (15);

b) the heat pump (15) comprises a condenser which has a jacket pipe (1), a middle pipe (2) which is coaxially arranged inside the jacket pipe (1) and an inner pipe (6) wich is centrally arranged inside the middle pipe (2);

c) a first annular space (3) arranged in the coolant circuit of the heat pump (15), located between the jacket pipe (1) and the middle pipe (2);

d) a second annular space (8) for the through flow of a heat carrier of a heating circuit in which the heating boiler (16) is incorporated, located between the middle pipe (2) and the inner pipe (6);

e) the inner pipe (6) is arranged in an industrial water circuit (6a);

*characterised by* the features:

f) a short-circuit line (9) consisting of part-lines (9a, 9b, 9c) connects an output coupling nipple (8b) of the second annular space (8) to the input coupling nipple (8a) of the second annular space (8);

g) the supply of heat carrier to the input coupling nipple (8a) can be shut off by a three-way valve (11), to which the part-lines (9b, 9c) and a flow line (18) of the heating circuit are connected;

h) the discharge of the heat carrier from the output coupling nipple (8b) can be shut off by a four-way valve (12) when the supply of heat carrier to the input coupling nipple (8a) is shut off, to which four-way valve the part-lines (9a, 9b), as well as a flow line (17) from and a return line (23) to the heating boiler (16), are connected.

2. A heating installation as claimed in Claim 1, *characterised in* that the short-circuit line (9) includes a separate circulating pump (10).

FIG 1

FIG 2